# EUROPEAN PATENT APPLICATION

(11) **EP 4 769 906 A1**
(43) Date of publication of application: **01.07.2026**
(21) Application number: 25226732.3
(22) Date of filing: 23.12.2025
(51) Int. Cl.: H02K 1/32, H02K 1/276

(54) **ROTOR**

(30) Priority: 26.12.2024 JP 2024230754
(71) Applicant: Toyota Jidosha Kabushiki Kaisha, Toyota-shi, Aichi-ken 471-8571 (JP)
(72) Inventor: KATSUMATA, Junya, Toyota-shi, 471-8571 (JP); YAMADA, Daiki, Toyota-shi, 471-8571 (JP); OHIRA, Kengo, Toyota-shi, 471-8571 (JP); NODA, Ken, Toyota-shi, 471-8571 (JP)
(74) Representative: TBK

(57) **Abstract**

A rotor (10) includes: a shaft (12) extending along an axial direction; and a rotor core (14) fixed to an outer circumferential surface of the shaft (12) and having a plurality of magnet holes (40) each extending along the axial direction. At least one magnet (42, 44) and a cooling pipe (46) are disposed in each of the magnet holes (40). The cooling pipe (46) extends along the axial direction and includes a path for a coolant to flow. Selected Drawing: FIG. 3

## Description

### BACKGROUND OF THE INVENTION

### 1. Field of the Invention

The technology disclosed in the present specification relates to a rotor for an electric motor.

### 2. Description of Related Art

Japanese Patent No. 5120538 (JP 5120538 B) describes a rotor for an electric motor. The rotor includes a shaft extending along an axial direction and a rotor core fixed to the outer circumferential surface of the shaft. The rotor core has a plurality of magnet holes, and a magnet is disposed in each of the magnet holes. Each of the magnet holes includes a space along the axial direction to allow a coolant to flow along the magnet.

### SUMMARY OF THE INVENTION

To cause the coolant to flow through the magnet hole as in the above structure, it is necessary to provide the space serving as a coolant path inside the magnet hole. When the space is present inside the magnet hole, however, there is a problem of decrease in strength with which the magnet is fixed to the magnet hole.

The present specification provides a technology that allows a coolant to flow through a magnet hole while firmly fixing a magnet to the magnet hole.

The technology disclosed in the present specification is embodied in a rotor for an electric motor. In a first aspect, the rotor includes: a shaft extending along an axial direction; and a rotor core fixed to an outer circumferential surface of the shaft and having a plurality of magnet holes each extending along the axial direction. At least one magnet and a cooling pipe are disposed in each of the magnet holes. The cooling pipe extends along the axial direction and includes a path for a coolant to flow.

In the above configuration, the cooling pipe is disposed in the magnet hole, and the cooling pipe includes the path for the coolant to flow. With this configuration, the cooling pipe has a certain rigidity. Therefore, even though a space is formed in the cooling pipe, it is possible to suppress a decrease in strength with which the magnet is fixed to the magnet hole.

In a second aspect, in the first aspect described above, the at least one magnet and the cooling pipe may be fixed to the magnet hole by a filler that fills the magnet hole. With this configuration, the at least one magnet and the cooling pipe can be firmly fixed to the magnet hole.

In a third aspect, in the second aspect described above, the filler may be made of resin. Resin has electrical insulating properties and is also excellent in moldability.

In a fourth aspect, in any one of the first to third aspects described above, the at least one magnet may include a first magnet and a second magnet. In this case, the cooling pipe may extend in the axial direction between the first magnet and the second magnet. With this configuration, the first magnet and the second magnet disposed in the same magnet hole can be cooled effectively.

In a fifth aspect, in the fourth aspect described above, the cooling pipe may be in direct contact with each of the first magnet and the second magnet. With this configuration, the first magnet and the second magnet can be cooled more effectively.

In a sixth aspect, in any one of the first to fifth aspects described above, the cooling pipe may be made of an electrically insulating material. With this configuration, it is possible to suppress eddy current loss in the cooling pipe.

In a seventh aspect, in any of the first to sixth aspects described above, the rotor core may include a first end face and a second end face, and extend along the axial direction from the first end face to the second end face. In this case, the cooling pipe may extend from the first end face to the second end face of the rotor core. With this configuration, the cooling pipe can cool the magnet over the entire length of the rotor core.

In an eighth aspect, in the seventh aspect described above, the rotor may further include a first end plate fixed to the outer circumferential surface of the shaft and disposed to adjoin the first end face of the rotor in the axial direction. In this case, the first end plate may include a coolant supply path for supply of the coolant to the cooling pipe.

In a ninth aspect, in the eighth aspect described above, the shaft may include a shaft coolant path through which the coolant is supplied from an outside. In this case, the coolant supply path of the first end plate may connect the shaft coolant path and the cooling pipe.

In a tenth aspect, in the ninth aspect described above, the rotor may further include a second end plate fixed to the outer circumferential surface of the shaft and disposed to adjoin the second end face of the rotor in the axial direction. In this case, the second end plate may include a coolant discharge path for discharge of the coolant from the cooling pipe.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view schematically showing the configuration of an electric motor 2 using a rotor 10 according to an embodiment;
FIG. 2 is a sectional view showing the internal configuration of the rotor 10 according to the embodiment, in which arrows F schematically indicate the flow of a coolant;
FIG. 3 is a sectional view taken along line III-III in FIG. 2; and
FIG. 4 is an enlarged view of part IV in FIG. 3.

### DETAILED DESCRIPTION OF EMBODIMENTS

A rotor 10 according to an embodiment and an electric motor 2 using the rotor 10 will be described with reference to the drawings. The electric motor 2 can be used as a prime mover for driving wheels in, for example, an electrified vehicle. The electrified vehicle herein includes a battery electric vehicle (BEV), a fuel cell electric vehicle (FCEV), a hybrid electric vehicle (HEV), and a plug-in hybrid electric vehicle (PHEV). The electric motor 2 is a three-phase alternating current (AC) motor. The configuration described in the present embodiment is not limited to the three-phase AC motor, but can similarly be used in other types of electric motor.

In the present embodiment, a cylindrical coordinate system D1, D2, D3 is defined with a rotation axis X of the electric motor 2 as the reference. A direction D1 in the drawings is a direction parallel to the rotation axis X of the electric motor 2, and is an axial direction in the present embodiment. A direction D2 is a direction that perpendicularly intersects the rotation axis X, and is a radial direction in the present embodiment. A direction D3 is a direction perpendicular to the directions D1 and D2, and is a circumferential direction in the present embodiment.

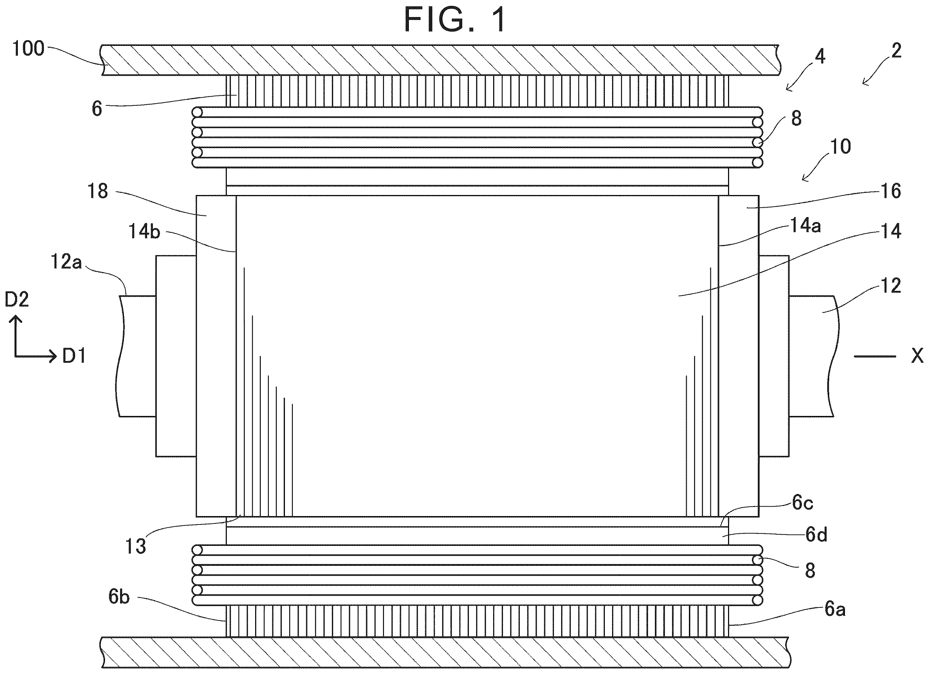

As shown in FIG. 1, the electric motor 2 mainly includes a stator 4, the rotor 10, and a casing 100. The casing 100 houses the stator 4 and the rotor 10. The stator 4 is fixed to the casing 100, and the rotor 10 is rotatably supported by the casing 100.

First, the configuration of the stator 4 will be described. As for the rotor 10 of the present embodiment, the specific configuration of the stator 4 is not particularly limited. The rotor 10 of the present embodiment can be used in combination with various other types of stator.

For example, the stator 4 may include a stator core 6 and a stator coil 8. The stator core 6 has a cylindrical shape overall, and is disposed to surround the rotor 10. The stator core 6 includes a first end face 6a and a second end face 6b in the axial direction. The stator core 6 extends along the axial direction from the first end face 6a to the second end face 6b. The stator core 6 is formed by stacking a plurality of silicon steel plates (also called electromagnetic steel plates). A plurality of slits 6d is formed in an inner circumferential surface 6c of the stator core 6. The slits 6d are arranged at equal intervals along the circumferential direction. Each of the slits 6d extends along the axial direction from the first end face 6a to the second end face 6b of the stator core 6.

The stator coil 8 is disposed across the slits 6d of the stator core 6. The stator coil 8 is formed by conductor wires such as coil segments. The stator coil 8 may have a distributed winding structure or a concentrated winding structure. The stator coil 8 is supplied with three-phase alternating currents from the outside. When the stator coil 8 is supplied with the three-phase alternating currents, a rotating magnetic field is generated in the internal space of the stator core 6 where the rotor 10 is disposed.

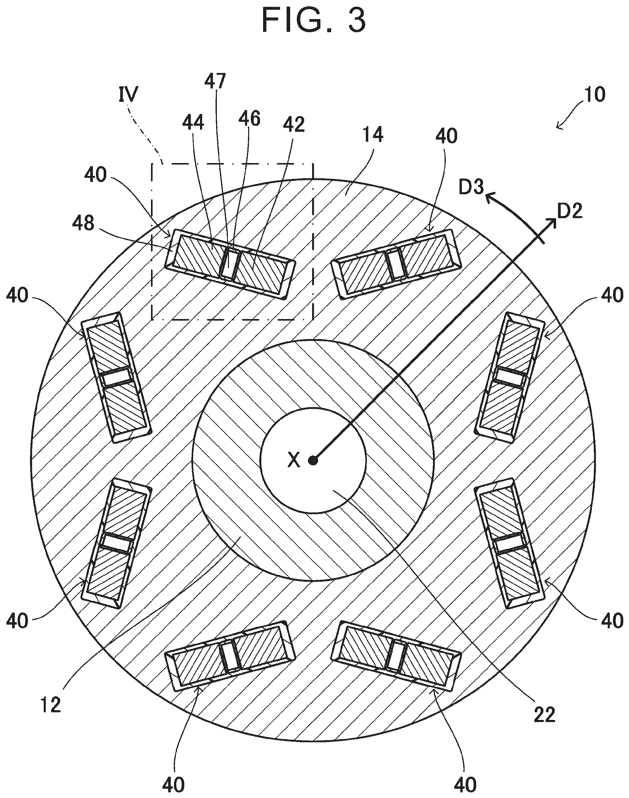

Next, the configuration of the rotor 10 of the embodiment will be described. As shown in FIGS. 1 and 3, the rotor 10 includes a shaft 12, a rotor core 14, and a pair of end plates 16, 18. The shaft 12 extends along the rotation axis X of the electric motor 2. The shaft 12 is rotatably supported by the casing 100 around the rotation axis X. That is, in a strict sense, the rotation axis X of the electric motor 2 means the rotation axis of the rotor 10. The shaft 12 is made of steel such as stainless steel. The material of the shaft 12 is not particularly limited. A shaft coolant path 20 is provided inside the shaft 12. The shaft coolant path 20 will be described in detail later.

The rotor core 14 is fixed to an outer circumferential surface 12a of the shaft 12. Therefore, the rotor core 14 rotates together with the shaft 12. The rotor core 14 has a cylindrical shape overall, and is disposed to surround the shaft 12. The rotor core 14 includes a first end face 14a and a second end face 14b in the axial direction. The rotor core 14 extends along the axial direction from the first end face 14a to the second end face 14b. The rotor core 14 is formed by stacking a plurality of silicon steel plates 13 (also called electromagnetic steel plates). The material of the rotor core 14 is not limited to silicon steel, and may be other types of magnetic material.

The end plates 16, 18 are fixed to the outer circumferential surface 12a of the shaft 12. The end plates 16, 18 include a first end plate 16 and a second end plate 18. The first end plate 16 is disposed to adjoin the first end face 14a of the rotor core 14. The second end plate 18 is disposed to adjoin the second end face 14b of the rotor core 14. Therefore, the rotor core 14 is sandwiched between the end plates 16, 18 in the axial direction. For example, each of the end plates 16, 18 is made of a non-magnetic material such as an aluminum alloy. The first end plate 16 includes a plurality of coolant supply paths 60, and the second end plate 18 includes a plurality of coolant discharge paths 80. The coolant supply path 60 and the coolant discharge path 80 will be described in detail later.

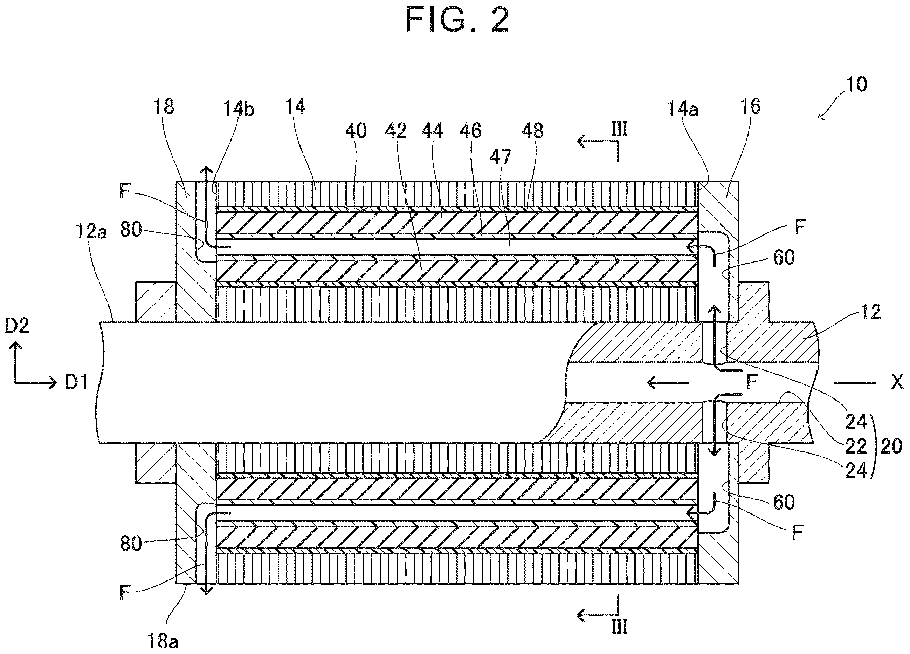

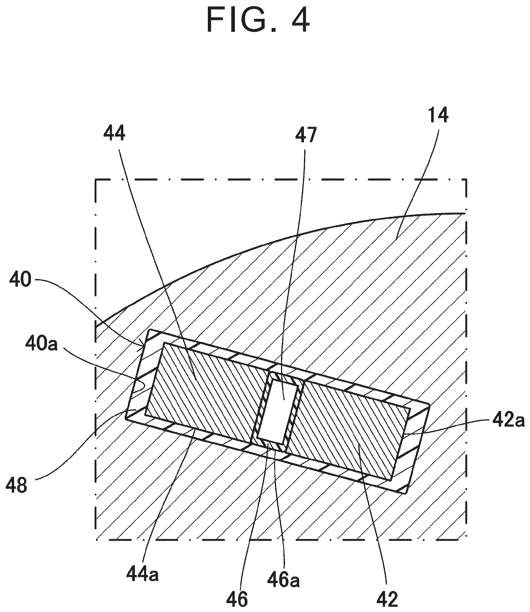

Next, the internal configuration of the rotor core 14 will be described with reference to FIGS. 2 to 4. The rotor core 14 has a plurality of magnet holes 40. The magnet holes 40 are arranged at equal intervals along the circumferential direction. Each of the magnet holes 40 extends along the axial direction from the first end face 14a to the second end face 14b of the rotor core 14. The number and disposition of the magnet holes 40 are not particularly limited. Further, the sectional shape and size of each magnet hole 40 are not particularly limited.

A first magnet 42, a second magnet 44, and a cooling pipe 46 are disposed in each of the magnet holes 40. The first magnet 42 and the second magnet 44 are permanent magnets such as rare earth magnets. Each of the first magnet 42 and the second magnet 44 extends along the axial direction from the first end face 14a to the second end face 14b of the rotor core 14. The cooling pipe 46 also extends along the axial direction from the first end face 14a to the second end face 14b of the rotor core 14. The cooling pipe 46 is located between the first magnet 42 and the second magnet 44, and is in direct contact with each of the first magnet 42 and the second magnet 44. The number of magnets 42, 44 is not particularly limited. It is appropriate that at least one magnet be disposed in each of the magnet holes 40.

The first magnet 42, the second magnet 44, and the cooling pipe 46 are fixed to the magnet hole 40 by a filler 48 that fills the magnet hole 40. For example, the filler 48 is made of resin. The filler 48 completely fills a gap between an outer surface 42a of the first magnet 42 and an inner surface 40a of the magnet hole 40, a gap between an outer surface 44a of the second magnet 44 and the inner surface 40a of the magnet hole 40, and a gap between the cooling pipe 46 and the inner surface 40a of the magnet hole 40. Therefore, the two magnets 42, 44 and the cooling pipe 46 are firmly fixed to the magnet hole 40. When manufacturing the rotor 10, the two magnets 42, 44 and the cooling pipe 46 are disposed in the magnet hole 40, and then molten resin is injected into the gaps within the magnet hole 40 to form the filler 48. As another embodiment, the filler 48 may be formed by disposing a foamable resin in the gaps within the magnet hole 40 and foaming it by heating.

The cooling pipe 46 is a hollow pipe member. A space 47 extending in the axial direction is formed within the cooling pipe 46. The space 47 extends from the first end face 14a to the second end face 14b of the rotor core 14. The space 47 within the cooling pipe 46 functions as a path for the coolant to flow. The coolant may be, but is not limited to, oil such as lubricating oil. When the coolant flows through the cooling pipe 46, the first magnet 42 and the second magnet 44 adjacent to the cooling pipe 46 are cooled. In particular, the cooling pipe 46 of the present embodiment is located between the first magnet 42 and the second magnet 44, and is in direct contact with each of the first magnet 42 and the second magnet 44. Therefore, the coolant flowing through the cooling pipe 46 can effectively cool the first magnet 42 and the second magnet 44.

The manner in which the coolant is supplied to the cooling pipe 46 is not particularly limited. For example, in the rotor 10 of the present embodiment, the coolant is supplied to the cooling pipes 46 of the magnet holes 40 through the shaft coolant path 20 provided in the shaft 12 and the coolant supply paths 60 provided in the first end plate 16. As shown in FIG. 2, the shaft coolant path 20 includes a main path 22 extending in the axial direction, and a plurality of branch paths 24 extending radially from the main path 22. Each of the branch paths 24 extends to the outer circumferential surface 12a of the shaft 12 and is open toward the first end plate 16. In the first end plate 16, the coolant supply paths 60 extend radially. The coolant supply paths 60 connect the branch paths 24 of the shaft 12 to the cooling pipes 46 of the magnet holes 40.

The coolant is supplied to the shaft coolant path 20 of the shaft 12 from the outside of the rotor 10 by, for example, an oil pump (not shown). As indicated by arrows F in FIG. 2, the coolant supplied to the shaft coolant path 20 flows from the main path 22 to the branch paths 24, and flows into the coolant supply paths 60 of the first end plate 16. The coolant is then supplied to the cooling pipes 46 of the magnet holes 40 through the coolant supply paths 60. The coolant supplied to the cooling pipes 46 flows in the axial direction toward the second end face 14b of the rotor core 14.

As described above, the second end plate 18 adjoins the second end face 14b of the rotor core 14. The second end plate 18 includes the coolant discharge paths 80. The coolant discharge paths 80 are connected to the cooling pipes 46 of the magnet holes 40 at the second end face 14b of the rotor core 14. Therefore, the coolant from the cooling pipes 46 is discharged to the outside of the rotor 10. For example, each of the coolant discharge paths 80 extends to an outer circumferential surface 18a of the second end plate 18. With this configuration, the coolant discharged from the coolant discharge paths 80 is supplied to the stator coil 8, thereby cooling the stator coil 8.

As described above, in the rotor 10 of the present embodiment, the cooling pipe 46 is disposed in the magnet hole 40, and the cooling pipe 46 includes the path for the coolant to flow (space 47). Therefore, the magnets 42, 44 disposed in the same magnet hole 40 can be cooled directly. Hitherto, when the path for the coolant to flow (space) is formed in the magnet hole 40, there is a problem of decrease in strength with which the magnet is fixed to the magnet hole. In this regard, in the rotor 10 of the present embodiment, the cooling pipe 46 forms the path for the coolant to flow (space 47). With this configuration, the cooling pipe 46 has a certain rigidity. Therefore, even though the space 47 is formed in the cooling pipe 46, it is possible to suppress the decrease in strength with which the magnets 42, 44 are fixed to the magnet hole 40.

The material of the cooling pipe 46 is not particularly limited. For example, the cooling pipe 46 of the present embodiment is made of resin. The cooling pipe 46 is not limited to being made of resin, and may be made of an electrically insulating material. With this configuration, it is possible to suppress eddy current loss in the cooling pipe 46.

Although the specific examples of the technology disclosed in the present specification have been described in detail above, these are merely examples and do not limit the scope of claims. The technology described in the claims includes various modifications and alternations of the specific examples illustrated above. The technical elements described in the present specification or the drawings exhibit technical utility alone or in various combinations, and are not limited to the combinations described in the claims as originally filed. The technology exemplified in the present specification or the drawings may achieve a plurality of objects at the same time, and has technical utility by achieving one of the objects.

## Claims

1. A rotor (10) for an electric motor (2), the rotor (10) comprising:
a shaft (12) extending along an axial direction; and
a rotor core (14) fixed to an outer circumferential surface of the shaft (12) and having a plurality of magnet holes (40) each extending along the axial direction, wherein
at least one magnet (42, 44) and a cooling pipe (46) are disposed in each of the magnet holes (40), and
the cooling pipe (46) extends along the axial direction and includes a path for a coolant to flow.

2. The rotor (10) according to claim 1, wherein the at least one magnet (42, 44) and the cooling pipe (46) are fixed to the magnet hole (40) by a filler (48) that fills the magnet hole (40).

3. The rotor (10) according to claim 2, wherein the filler (48) is made of resin.

4. The rotor (10) according to claim 1, wherein:
the at least one magnet (42, 44) includes a first magnet (42) and a second magnet (44); and
the cooling pipe (46) extends in the axial direction between the first magnet (42) and the second magnet (44).

5. The rotor (10) according to claim 4, wherein the cooling pipe (46) is in direct contact with each of the first magnet (42) and the second magnet (44).

6. The rotor (10) according to claim 1, wherein the cooling pipe (46) is made of an electrically insulating material.

7. The rotor (10) according to claim 1, wherein:
the rotor core (14) includes a first end face (14a) and a second end face (14b), and extends along the axial direction from the first end face (14a) to the second end face (14b); and
the cooling pipe (46) extends from the first end face (14a) to the second end face (14b) of the rotor core (14).

8. The rotor (10) according to claim 7, further comprising a first end plate (16) fixed to the outer circumferential surface of the shaft (12) and disposed to adjoin the first end face (14a) of the rotor (10) in the axial direction, wherein
the first end plate (16) includes a coolant supply path (60) for supply of the coolant to the cooling pipe (46).

9. The rotor (10) according to claim 8, wherein:
the shaft (12) includes a shaft coolant path (20) through which the coolant is supplied from an outside; and
the coolant supply path (60) of the first end plate (16) connects the shaft coolant path (20) and the cooling pipe (46).

10. The rotor (10) according to claim 9, further comprising a second end plate (18) fixed to the outer circumferential surface of the shaft (12) and disposed to adjoin the second end face (14b) of the rotor (10) in the axial direction, wherein
the second end plate (18) includes a coolant discharge path (80) for discharge of the coolant from the cooling pipe (46).
